# EUROPEAN PATENT SPECIFICATION

(11) **EP 1 472 677 B1**
(45) Date of publication and mention of the grant of the patent: **02.08.2006**
(21) Application number: 03700403.3
(22) Date of filing: 17.01.2003
(51) Int. Cl.: G09G 3/34

(54) **SEAMLESS HIGHLIGHTING IN LCD MONITORS AND LCD-TV**
ÜBERGANGSLOSE AUFHELLUNG VON LCD-MONITOREN UND LCD-FERNSEHGERÄTEN
MISE EN SURBRILLANCE SANS RUPTURE DE CONTINUITE D' ECRANS ET DE TELEVISIONS A CRISTAUX LIQUIDES

(30) Priority: 22.01.2002 US 55351
(43) Date of publication of application: 03.11.2004
(73) Proprietor: Koninklijke Philips Electronics N.V., 5621 BA Eindhoven (NL)
(72) Inventor: BRUNING, Gert, W., NL-5656 AA Eindhoven (NL); CHANG, Chin, NL-5656 AA Eindhoven (NL)
(74) Representative: Bosma, Rudolphus Hubertus Antonius
(86) International application number: PCT/IB2003/000113
(87) International publication number: WO 2003/063125

(56) References cited:
- WO-A-01/41118
- US-A- 4 033 263
- US-A- 5 786 801
- US-A- 6 151 008
- US-A1- 2002 097 210
- US-B1- 6 313 586

## Description

### TECHNICAL FIELD

The technical field of this disclosure is liquid crystal display panels, particularly, a liquid crystal display panel providing rapid highlighting.

### BACKGROUND OF THE INVENTION

Liquid crystal display (LCD) panels have developed as an alternative to cathode ray tubes (CRTs), offering the advantage of a thin profile and brilliant display. LCD panels have been used for a number of applications, including computer monitors and television displays.

One highly desirable feature for displays is the ability to highlight a portion of a display at a brighter intensity for easier viewing. For example, a computer user may wish to use a cursor to delineate a portion of a picture on a display and brighten that portion for easier viewing. In another example, a computer or television user may want to view one program in the main display and another program in an inset window. The two programs may require different amounts of lighting: a simple, high contrast subject such as text can be easily seen, but a complex subject such as video may require brighter intensity lighting. Highlighting the complex subject makes it easier to see.

Document WO01/41118, on which the preamble of claims 1 and 15 is based, discloses an apparatus and method for highlighting a selected portion of a display screen, wherein a colour temperature within said selected portion is increased, thereby increasing the apparent brightness of the selected portion.

Document US2002/0097210, published after the priority date of the present application, describes a system for increasing the portion of a video signal, e.g. on an LCD device.

LCD panels have lagged CRTs in highlighting functionality. LCD panels typically use one or two fluorescent lamps, such as a mercury vapor cold cathode fluorescent lamps (CCFLs), to provide a uniform backlighting of the LCD panel. CRTs are able to quickly highlight a portion of the display by increasing beam energy, while LCD panel highlighting lags due to the time required to increase the backlight lamp temperature. Individual liquid crystal (LC) elements control the brightness of specific areas of the LCD panel. The lamps must be at the full brightness level before the LC elements can provide the proper highlighting.

For the present generation of LCD panels possessing a highlighting function, the lamps normally operate at 50% lamp current and light output during conditions of non-highlighting. The lamp is stepped to 100% lamp current when highlighting is required. Because of the thermal lag in the lamp, there is visible delay of 10 to 20 seconds before the lamp reaches 100% light output. This is undesirable, as the user must wait for the highlighting to appear. The user may even think that the delay indicates a problem with the display or the computer.

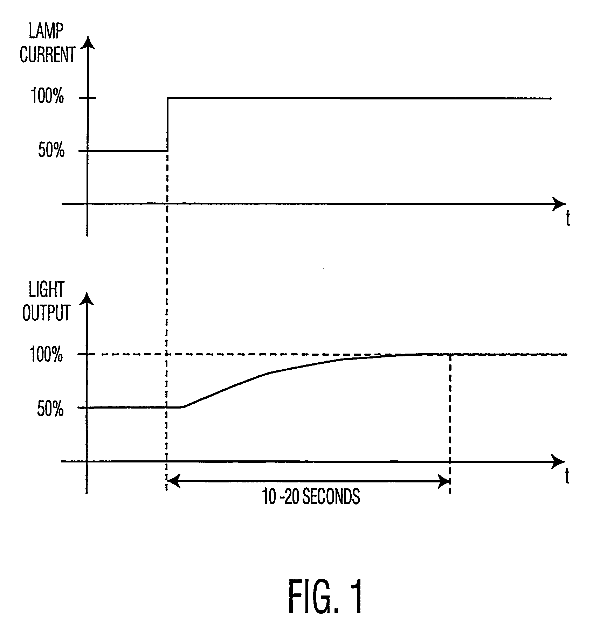

Fig. 1 shows a graph of a step increase in lamp current and the delay in lamp light output. The lamp current is initially 50% and the lamp light output is initially 50%. When the user requests highlighting, the lamp current is increased to 100% and the light output gradually increases from 50% to 100% over 10 to 20 seconds. The user must wait the 10 to 20 seconds before the highlighting is effective.

It would be desirable to have a liquid crystal display panel providing rapid highlighting that would overcome the above disadvantages.

### SUMMARY OF THE INVENTION

One aspect of the present invention provides a liquid crystal display panel providing rapid highlighting without a substantial delay.

Another aspect of the present invention provides a liquid crystal display panel providing rapid highlighting that reduces the user waiting time. The foregoing and other features and advantages of the invention will become further apparent from the following detailed description of the presently preferred embodiments, read in conjunction with the accompanying drawings. The detailed description and drawings are merely illustrative of the invention, rather than limiting the scope of the invention being defined by the appended claims and equivalents thereof.

### BRIEF DESCRIPTION OF THE DRAWINGS

Fig. 1 shows a graph of a step increase in lamp current and the delay in lamp light output.
Fig. 2 shows a block diagram of a liquid crystal display panel system made in accordance with the present invention.
Fig. 3 shows a graph of lamp current and light output for a liquid crystal display panel applying an intermediate current made in accordance with the present invention.
Fig. 4 shows a graph of lamp current for an alternate embodiment of a liquid crystal display panel applying an intermediate current made in accordance with the present invention.
Fig. 5 shows a graph of lamp current for yet another alternate embodiment of a liquid crystal display panel applying an intermediate current made in accordance with the present invention.
Fig. 6 shows a graph of lamp current for yet another alternate embodiment of a liquid crystal display panel applying an alternate intermediate current to leave the highlighting mode made in accordance with the present invention.

### DESCRIPTION OF THE PREFERRED EMBODIMENT

The liquid crystal display panel of the present invention provides rapid highlighting of the display. To provide highlighting, current to the backlighting lamp is increased from a normal current to a highlighting current. During the transition from the normal current to the highlighting current, the current to backlighting lamp is increased to an intermediate current above the highlighting current, and then decreased to the highlighting current. The increase to an intermediate current provides greater energy to the backlighting lamp than a direct increase from the low current to the highlighting current. The increased energy heats the backlighting lamp quickly to provide the increased light for highlighting. In addition, reducing the current to the backlighting lamp below the normal current when leaving the highlighting mode decreases the time to leave the highlighting mode.

Document US 6,313,586 discloses a control apparatus for a scanner light source, capable of improved rise time, in that the light source is overpowered until a desired output is reached.

Document US 4,033,263 discloses a power control for a discharge lamp for a printing press, wherein after start-up of the lamp, the current decreases exponentially to a nominal value.

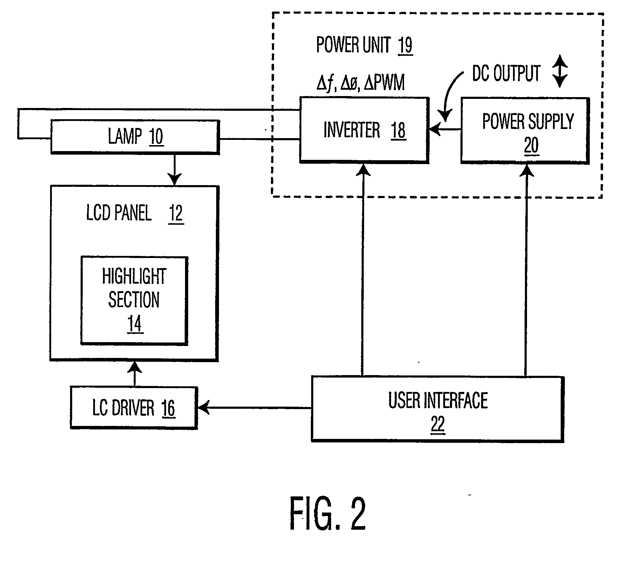

Fig. 2 shows a block diagram of a liquid crystal display panel system made in accordance with the present invention. Liquid crystal display (LCD) panel 12 having a highlight section 14 is backlit by lamp 10. Liquid crystal (LC) driver 16 controls the liquid crystal array of the LCD panel 12. Power supply 20 supplies DC power to inverter 18, which provides current to the lamp 10. User interface 22 controls the LC driver 16, the inverter 18, and the power supply 20.

Liquid crystal display (LCD) panel 12 can be a conventional LCD panel comprising an array of pixels. The pixels further comprise liquid crystal shutters to adjust brightness from each particular pixel, and can have color filters to provide a color display. The liquid crystal shutters are controlled by the LC driver 16. The liquid crystal shutters of the highlight section 14 are more open than the liquid crystal shutters in the rest of the LCD panel 12 to provide the additional brightness required for highlighting.

Lamp 10 provides backlighting for the LCD panel 12 so that the light is transmitted through the pixels to the user. Typically, the lamp 10 can be one or more fluorescent lamps, such as mercury vapor cold cathode fluorescent lamps (CCFLs). The lamp 10 can also be provided with a light guide to direct the light and assure uniform backlighting behind the LCD panel 12. The lamp 10 typically operates at a low power level, such as 50% light output, during normal operation and at a high power level, such as 100% light output, when highlighting is requested by the user. The highlight section 14 can be formed with the lamp 10 operating at the high power level and the LC driver 16 opening the shutters for the pixels in the highlight section 14. In one embodiment, the highlight section 14 can cover the whole display of the LCD panel 12.

Power unit 19 comprises power supply 20 and inverter 18, and provides the power to the lamp 10. The power supply 20 produces a DC output voltage to feed the inverter 18, which produces an AC output for the lamp 10. The power supply 20 and inverter 18 can be used separately or in combination control the current to the lamp 10. The power supply 20 can adjust the DC output voltage to the inverter 18 to provide the desired amount of current to the lamp 10. The inverter 18 can adjust the frequency, phase, pulse width modulation, or a combination of these parameters, to adjust the current to the lamp 10. The power supply 20 and inverter 18 are commercially available and are well known to those skilled in the art.

User interface 22 accepts the highlighting request from the user and coordinates the highlighting of the LCD panel 12. The user interface 22 can be a controller, such as a computer or a microprocessor. The user interface 22 can be a single component or be distributed among several components. The user interface 22 directs a control signal to one or both of the inverter 18 and the power supply 20 to provide the proper current to the lamp 10. The user interface 22 also directs the LC driver 16 through highlight area control signals to adjust the liquid crystal shutters of LCD panel 12 to provide highlighted and non-highlighted regions, as desired by the user. Transitions to and from the highlighted mode, including intermediate currents to the lamp 10, are also controlled by the user interface 22 through intermediate control signals to the inverter 18 and the power supply 20.

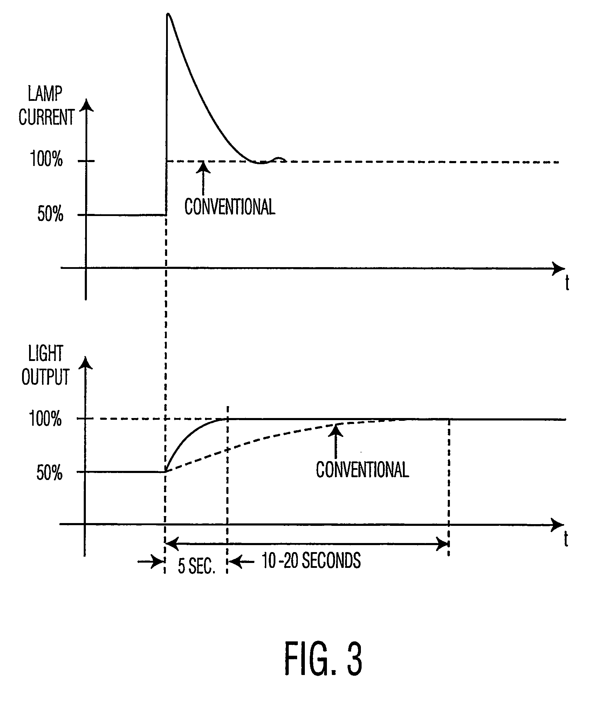

Fig. 3 shows a graph of lamp current and light output for a liquid crystal display panel applying an intermediate current. The lamp current is initially at the low current of 50% and the lamp light output is initially 50%. When the user requests highlighting at the user interface, the user interface directs the inverter and/or power supply to increase lamp current to an intermediate current above the highlighting current of 100% then to decrease lamp current to the highlighting current of 100%. In this embodiment, the intermediate current is a step to a peak value with a decrease from the peak value as an exponential decay such as an RC (resistor-capacitor) circuit can produce. The light output of the lamp increases rapidly from 50% to 100% over about 5 seconds, at which time the highlighting is effective. On receiving the highlighting request, the user interface also directs the LC driver to adjust the liquid crystal shutters to form the highlighted section. The dashed lines illustrate the 10 to 20 second highlighting delay associated with a conventional LCD panel system, where the current is increased directly from the low current to the highlighting current.

Lamp characteristics determine how quickly highlighting can be achieved. While it is desirable to provide as much current to the lamp as possible to maximize heating and minimize time to achieve highlighting, too great a current can damage the lamp electrodes. The magnitude of the peak value and the current as a function of time consistent with preservation of lamp lifetime can be determined through experiment or calculation. In other embodiments with light output feedback, the magnitude of the peak value and the current as a function of time can be controlled by a feedback loop which attempts to obtain the desired light level as quickly as possible.

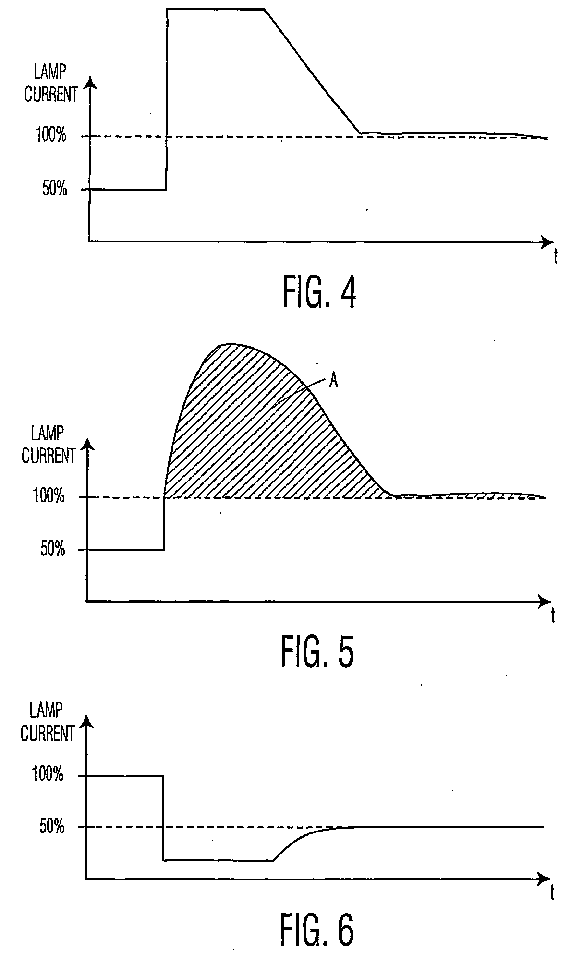

Figs. 4 and 5 show graphs of lamp current for alternate embodiments applying alternate intermediate currents. Referring to Fig. 4, the lamp current is initially at the low current of 50%. When the user requests highlighting at the user interface, the user interface directs the inverter and/or power supply to increase lamp current to an intermediate current above the highlighting current of 100%, hold the lamp current at the peak value for a predetermined time, then to decrease lamp current substantially linearly to the highlighting current of 100%. Referring to Fig. 5, the lamp current is initially at the low current of 50%. When the user requests highlighting at the user interface, the user interface directs the inverter and/or power supply to increase lamp current to a peak value above the highlighting current of 100% along a predetermined curve and then to decrease lamp current along the predetermined curve to the highlighting current of 100%. The curve can be determined to maximize the area A under the curve within the constraint of electrode current handling capability, i.e., avoiding severe electrode sputtering. This approach delivers the maximum energy to the lamp, providing the fastest warm-up and quickest highlighting.

Fig. 6 shows a graph of lamp current for an alternate embodiment applying an alternate intermediate current to leave the highlighting mode. The above discussion of going from the normal mode to the highlighting mode, i.e., going from 50% to 100% lamp current, applies equally to going from the highlighting mode to the normal mode, i.e., going from 100% to 50% lamp current. Taking the lamp current to an intermediate value less than the target low current of 50% can achieve the normal mode more quickly than taking the lamp current directly to the 50% value.

Referring to Fig. 6, the lamp current is initially at the highlighting current of 100% so that the lamp light output would be 100% in the highlighting mode. When the user requests termination of highlighting at the user interface, the user interface directs the inverter and/or power supply to decrease lamp current to an intermediate current below the low current of 50%, hold the lamp current at the minimum value for a predetermined time, then increase lamp current to the low current of 50%. The light output of the lamp decreases rapidly from 100% to 50%, at which time the highlighting ends. On receiving the highlighting termination request, the user interface also directs the LC driver to adjust the liquid crystal shutters to remove the highlighted section.

It is important to note that Figs. 2-6 illustrate specific applications and embodiments of the present invention, and are not intended to limit the scope of the present disclosure or claims to that which is presented therein. For example, numerous variations in the shape and magnitude of the lamp current versus time curve can be used to good effect. Lamp current can be varied by changing voltage, frequency, phase, or pulse width modulation, alone or in combination. The low and highlighting lamp current can be selected as values other than 50% and 100% and in different ratios than 1:2. Upon reading the specification and reviewing the drawings hereof, it will become immediately obvious to those skilled in the art that myriad other embodiments of the present invention are possible, and that such embodiments are contemplated and fall within the scope of the presently claimed invention.

While the embodiments of the invention disclosed herein are presently considered to be preferred, various changes and modifications can be made without departing from the scope of the invention. The scope of the invention is indicated in the appended claims, and all changes that come within the meaning and range of equivalents are intended to be embraced therein.

## Claims

1. A liquid crystal display panel system responsive to a highlighting request comprising: a liquid crystal display panel (12) having a highlight section (14);
a lamp (10) arranged to provide lighting to the liquid crystal display panel (12);
a power unit (19) operatively coupled to the lamp (10), the power unit (19) being arranged to provide current to the lamp (10);
a user interface (22); and
a liquid crystal driver (16) responsive to a highlight area control signal from the user interface (22) and arranged to control lighting of the highlight section (14) of the liquid crystal display panel (12);
**characterized in that**
the lamp (10) has a normal mode and a highlighting mode;
the user interface (22) is operatively coupled to the power unit (19), and is arranged to provide a control signal to the power unit (19), the power unit (19) being responsive to the control signal, the user interface is arranged to provide an intermediate control signal in response to the highlighting request, and the power unit (19) is arranged to increase in response to the intermediate control signal the current to the lamp (10) from normal mode current to an intermediate current above highlighting mode current, then to decrease the intermediate current to the highlighting mode current.

2. The system of claim 1 wherein the power unit (19) is arranged to increase in response to the intermediate control signal the current to the lamp (10) from normal mode current to an intermediate current above highlighting mode current in a step change, then to decrease the current to the lamp (10) exponentially to the highlighting mode current.

3. The system of claim 1 wherein the power unit (19) is arranged to increase in response to the intermediate control signal the current to the lamp (10) from normal mode current to an intermediate current above highlighting mode current in a step change, to hold the intermediate current for a predetermined time, then to decrease the current to the lamp (10) linearly to the highlighting mode current.

4. The system of claim 1 wherein the integrated area under an intermediate current-time curve is maximized for the characteristics of the lamp (10), within the constraint of the electrode current handling capability to avoid severe electrode sputtering.

5. The system of claim 1 wherein the power unit (19) comprises a power supply (20)supplying DC output voltage to a DC to AC inverter (18), the inverter (18) providing current to the lamp (10).

6. The system of claim 5 wherein the power supply (20) is arranged to control the current to the lamp (10) by varying DC output voltage in response to the control signal.

7. The system of claim 5 wherein, in response to the control signal, the inverter is arranged to (18) control the current to the lamp (10) by varying a current parameter selected from the group consisting of frequency, phase, pulse width modulation, and a combination thereof.

8. The system of claim 1 further comprising a lamp output sensor arranged to monitor light output of the lamp (10) and to provide a lamp output feedback signal, the lamp output feedback signal controlling the intermediate control signal.

9. A method of highlighting a highlight section (14) of a liquid crystal display panel (12) in response to a highlighting request comprising the steps of :
providing a lamp (10) for lighting the liquid crystal display panel, the lamp (10) having a normal mode and a highlighting mode, and wherein an LC driver (16) controls lighting of the highlight section (14) of the liquid crystal display panel (12);
increasing current to the lamp (10) from normal mode current to an intermediate current above highlighting mode current in response to the highlighting request; and
decreasing the intermediate current to the lamp (10) to the highlighting mode current.

10. The method of claim 9 further comprising the step of holding the intermediate current to the lamp (10) for a predetermined time.

11. The method of claim 9 wherein the step of increasing current to the lamp (10) from normal mode current further comprises increasing current by an increase selected from the group consisting of a step increase, a linear increase, and an exponential increase.

12. The method of claim 9 wherein the step of decreasing the intermediate current to the lamp (10) from normal mode current further comprises decreasing intermediate current by a decrease selected from the group consisting of a step decrease, a linear decrease, and an exponential decrease.

13. The method of claim 9 wherein the integrated area under an intermediate current-time curve from starting to increase current to the lamp (10) from normal mode current until finishing decreasing the intermediate current to the lamp (10) to reach the highlighting mode current is maximized for the characteristics of the lamp (10), within the constraint of the electrode current handling capability to avoid severe electrode sputtering.

14. The method of claim 9 further comprising the steps of : monitoring light output of the lamp (10) to produce a lamp output feedback signal; and adjusting the intermediate current based on the lamp output feedback signal.

15. A liquid crystal display panel system responsive to a highlighting termination request comprising: a liquid crystal display panel (12) having a highlight section (14);
a lamp (10) arranged to provide lighting to the liquid crystal display panel (12);
a power unit (19) operatively coupled to the lamp (10), the power unit (19) being arranged to provide current to the lamp (10);
a user interface (22); and
a liquid crystal driver (16) responsive to a highlight area control signal from the user interface (22) and arranged to control lighting of the highlight section (14) of the liquid crystal display panel (12);
**characterized in that**
the lamp (10) has a normal mode and a highlighting mode;
the user interface (22) is operatively coupled to the power unit (19), and is arranged to provide a control signal to the power unit (19), the power unit (19) being responsive to the control signal, the user interface is arranged to provide an intermediate control signal in response to the highlighting termination request, and the power unit (19) is arranged to decrease in response the intermediate control signal the current to the lamp (10) from highlighting mode current to an intermediate current below normal mode current, then to increase the intermediate current to the normal mode current.

## Patentansprüche

1. Flüssigkristallanzeigepanelsystem, welches auf eine Aufhellungsanforderung anspricht, mit:
- einem Flüssigkristallanzeigepanel (12) mit einem Aufhellungsteil (14),
- einer Lampe (10), welche so angeordnet ist, dass sie das Flüssigkristallanzeigepanel (12) beleuchtet,
- einer Stromversorgungseinheit (19), welche mit der Lampe (10) wirksam verbunden ist, wobei die Stromversorgungseinheit (19) so angeordnet ist, dass sie der Lampe (10) Strom zuführt,
- einer Benutzeroberfläche (22), sowie
- einem Flüssigkristalltreiber (16), welcher auf ein Steuersignal von der Benutzeroberfläche (22) für die aufzuhellende Fläche anspricht, und so angeordnet ist, dass er die Beleuchtung des Aufhellungsteils (14) des Flüssigkristallanzeigepanels (12) steuert,
**dadurch gekennzeichnet, dass**
- die Lampe (10) einen normalen Modus und einen Aufhellungsmodus vorsieht,
- die Benutzeroberfläche (22) mit der Stromversorgungseinheit (19) wirksam verbunden und so angeordnet ist, dass sie der Stromversorgungseinheit (19) ein Steuersignal zuführt, wobei die Stromversorgungseinheit (19) auf das Steuersignal anspricht, und die Benutzeroberfläche so vorgesehen ist, dass sie ein Zwischensteuersignal in Reaktion auf die Aufhellungsanforderung abgibt, und wobei die Stromversorgungseinheit (19) so angeordnet ist, dass sie in Reaktion auf das Zwischensteuersignal den der Lampe (10) zuzuführenden Strom von einem Normalstrom auf einen Zwischenstrom oberhalb des Aufhellungsstroms erhöht und den Zwischenstrom dann auf den Aufhellungsstrom reduziert.

2. System nach Anspruch 1, wobei die Stromversorgungseinheit (19) so vorgesehen ist, dass sie in Reaktion auf das Zwischensteuersignal den der Lampe (10) zuzuführenden Strom stufenweise von einem Normalstrom auf einen Zwischenstrom oberhalb des Aufhellungsstroms erhöht und den der Lampe (10) zuzuführenden Strom dann exponentiell auf den Aufhellungsstrom verringert.

3. System nach Anspruch 1, wobei die Stromversorgungseinheit (19) so vorgesehen ist, dass sie in Reaktion auf das Zwischensteuersignal den der Lampe (10) zuzuführenden Strom stufenweise von einem Normalstrom auf einen Zwischenstrom oberhalb des Aufhellungsstroms erhöht, den Zwischenstrom über einen vorgegebenen Zeitraum hält und den der Lampe (10) zuzuführenden Strom dann linear auf den Aufhellungsstrom verringert.

4. System nach Anspruch 1, wobei die integrierte Fläche unter einer Zwischenstrom-Zeit-Kurve auf die Charakteristiken der Lampe (10) innerhalb der Beschränkung der Elektrodenstrombelastbarkeit maximiert wird, um eine starke Elektrodenzerstäubung zu verhindern.

5. System nach Anspruch 1, wobei die Stromversorgungseinheit (19) ein Netzteil (20) aufweist, welches einem Wechselrichter (18) eine DC-Ausgangsspannung zuführt, wobei der Wechselrichter (18) an die Lampe (10) Strom abgibt.

6. System nach Anspruch 5, wobei das Netzteil (20) so vorgesehen ist, dass es den der Lampe (10) zuzuführenden Strom durch Verändern der DC-Ausgangsspannung in Reaktion auf das Steuersignal steuert.

7. System nach Anspruch 5, wobei der Wechselrichter (18) so vorgesehen ist, dass er den der Lampe (10) zuzuführenden Strom durch Verändern eines Stromparameters, welches aus der Gruppe aus Frequenz, Phase, Impulsbreitenmodulation oder einer Kombination daraus ausgewählt wird, steuert.

8. System nach Anspruch 1, welches weiterhin einen Lichtmengensensor auf weist, der so vorgesehen ist, dass er den Lichtstrom der Lampe (10) überwacht und ein Lichtmengenrückkopplungssignal abgibt, wobei das Lichtmengenrückkopplungssignal das Zwischensteuersignal steuert.

9. Verfahren zur Aufhellung eines Aufhellungsteils (14) eines Flüssigkristallanzeigepanels (12) in Reaktion auf eine Aufhellungsanforderung, wonach:
- eine Lampe (10) zur Beleuchtung des Flüssigkristallanzeigepanels vorgesehen ist, wobei die Lampe (10) einen Normalmodus und einen Aufhellungsmodus vorsieht und wobei ein LC-Treiber (16) die Beleuchtung des Aufhellungsteils (14) des Flüssigkristallanzeigepanels (12) steuert,
- der Lampe (10) zuzuführender Strom in Reaktion auf eine Aufhellungsanforderung von einem Normalstrom auf einen Zwischenstrom oberhalb des Aufhellungsstroms erhöht wird, und
- der Zwischenstrom, welcher der Lampe (10) zugeführt wird, auf den Aufhellungsstrom reduziert wird.

10. Verfahren nach Anspruch 9, wonach weiterhin der Zwischenstrom, welcher der Lampe (10) zugeführt wird, über einen vorgegebenen Zeitraum gehalten wird.

11. Verfahren nach Anspruch 9, wonach die Erhöhung des der Lampe (10) zuführenden Stroms von einem Normalstrom aus weiterhin die Erhöhung des Stroms um einen stufenweisen Anstieg, einen linearen Anstieg oder einen exponentiellen Anstieg umfasst.

12. Verfahren nach Anspruch 9, wonach die Reduzierung des der Lampe (10) zuzuführenden Stroms von einem Normalstrom aus weiterhin die Reduzierung des Zwischenstroms um eine stufenweise Verringerung, eine lineare Verringerung oder eine exponentielle Verringerung umfasst.

13. Verfahren nach Anspruch 9, wobei die integrierte Fläche unter einer Zwischenstrom-Zeit-Kurve ab Beginn der Erhöhung des der Lampe (10) zuzuführenden Stroms von einem Normalstrom bis zum Ende der Reduzierung des der Lampe (10) zuzuführenden Zwischenstroms zwecks Erreichens des Aufhellungsstroms auf die Charakteristiken der Lampe (10) innerhalb der Beschränkung der Elektrodenstrombelastbarkeit maximiert wird, um eine starke Elektrodenzerstäubung zu verhindern.

14. Verfahren nach Anspruch 9, wonach weiterhin der Lichtstrom der Lampe (10) überwacht wird, um ein Lichtmengenrückkopplungssignal zu erzeugen, und der Zwischenstrom auf Grund des Lichtmengenrückkopplungssignals eingestellt wird.

15. Flüssigkristallanzeigepanelsystem, welches auf eine Aufhellungsbeendigungsanforderung anspricht, mit:
- einem Flüssigkristallanzeigepanel (12) mit einem Aufhellungsteil (14),
- einer Stromversorgungseinheit (19), welche mit der Lampe (10) wirksam verbunden ist, wobei die Stromversorgungseinheit (19) so vorgesehen ist, dass sie der Lampe (10) Strom zuführt,
- einer Benutzeroberfläche (22), sowie
- einem Flüssigkristalltreiber (16), welcher auf ein Steuersignal von der Benutzeroberfläche (22) für die aufzuhellende Fläche anspricht, und so vorgesehen ist, dass er die Beleuchtung des Aufhellungsteils (14) des Flüssigkristallanzeigepanels (12) steuert,
**dadurch gekennzeichnet, dass**
- die Lampe (10) einen normalen Modus und einen Aufhellungsmodus vorsieht,
- die Benutzeroberfläche (22) mit der Stromversorgungseinheit (19) wirksam verbunden und so vorgesehen ist, dass sie der Stromversorgungseinheit (19) ein Steuersignal zuführt, wobei die Stromversorgungseinheit (19) auf das Steuersignal anspricht, und die Benutzeroberfläche so vorgesehen ist, dass sie ein Zwischensteuersignal in Reaktion auf die Aufhellungsbeendigungsanforderung abgibt, und wobei die Stromversorgungseinheit (19) so angeordnet ist, dass sie in Reaktion auf das Zwischensteuersignal den der Lampe (10) zuzuführenden Strom von dem Aufhellungsstrom auf einen Zwischenstrom unterhalb des Normalstroms reduziert und den Zwischenstrom dann auf den Normalstrom erhöht.

## Revendications

1. Système d'écran d'affichage à cristaux liquides réagissant à une demande de mise en évidence comprenant:
un écran d'affichage à cristaux liquides (12) ayant une section de mise en évidence (14);
une lampe (10) qui est agencée de manière à fournir un éclairage à l'écran d'affichage à cristaux liquides (12);
une unité de puissance (19) qui est couplée opérationnellement à la lampe (10), l'unité de puissance (19) étant agencée de manière à appliquer du courant à la lampe (10);
une interface utilisateur (22); et
un excitateur à cristaux liquides (16) réagissant à un signal de commande de la zone de mise en évidence à partir de l'interface utilisateur (22) et étant agencé de manière à commander l'éclairage de la section de mise en évidence (14) de l'écran d'affichage à cristaux liquides (12);
**caractérisé en ce que**
la lampe (10) présente un mode normal et un mode de mise en évidence;
l'interface utilisateur (22) est couplée opérationnellement à l'unité de puissance (19) et est agencée de manière à appliquer un signal de commande à l'unité de puissance (19), l'unité de puissance (19) réagissant au signal de commande, l'interface utilisateur est agencée de manière à appliquer un signal de commande intermédiaire en réaction à la demande de mise en évidence et l'unité de puissance (19) est agencée de manière à augmenter, en réaction au signal de commande intermédiaire, le courant à la lampe (10) à partir d'un courant en mode normal jusqu'à un courant intermédiaire étant supérieur au courant en mode de mise en évidence, alors à diminuer le courant intermédiaire jusqu'au courant en mode de mise en évidence.

2. Système selon la revendication 1, dans lequel l'unité de puissance (19) est agencée de manière à augmenter, en réaction au signal de commande intermédiaire, le courant à la lampe (10) à partir du courant en mode normal jusqu'à un courant intermédiaire étant supérieur au courant en mode de mise en évidence par un changement graduel, alors à diminuer exponentiellement le courant à la lampe (10) jusqu'au courant en mode de mise en évidence.

3. Système selon la revendication 1, dans lequel l'unité de puissance (19) est agencée de manière à augmenter, en réaction au signal de commande intermédiaire, le courant à la lampe (10) à partir du courant en mode normal jusqu'à un courant intermédiaire étant supérieur au courant en mode de mise en évidence par un changement graduel, à maintenir le courant intermédiaire pendant un temps prédéterminé et alors à diminuer linéairement le courant à la lampe (10) jusqu'au courant en mode de mise en évidence.

4. Système selon la revendication 1, dans lequel la zone intégrée au-dessous d'une courbe en fonction du temps de courant intermédiaire est maximisée pour les caractéristiques de la lampe (10) sous la contrainte de capacité de manipulation de courant d'électrode pour éviter une pulvérisation d'électrodes sévère.

5. Système selon la revendication 1, dans lequel l'unité de puissance (19) comprend une alimentation (20) fournissant une tension de sortie CC à un inverseur CC ou CA (18), l'inverseur (18) appliquant du courant à la lampe (10).

6. Système selon la revendication 5, dans lequel l'alimentation (20) est agencée de manière à commander le courant à la lampe (10) en faisant varier la tension de sortie CC en réaction au signal de commande.

7. Système selon la revendication 5, dans lequel, en réaction au signal de commande, l'inverseur (18) est agencé de manière à commander le courant à la lampe (10) en faisant varier un paramètre de courant qui est sélectionné parmi le groupe comprenant la fréquence, la phase, la modulation de largeur d'impulsion et une combinaison de celles-ci.

8. Système selon la revendication 1, comprenant encore un capteur de sortie de lampe qui est agencé de manière à contrôler le flux lumineux de la lampe (10) et à fournir un signal de rétroaction de sortie de lampe, le signal de rétroaction de sortie de lampe commandant le signal de commande intermédiaire.

9. Procédé de mise en évidence d'une section de mise en évidence (14) d'un écran d'affichage à cristaux liquides (12) en réaction à une demande de mise en évidence comprenant les étapes consistant à:
fournir une lampe (10) pour éclairer l'écran d'affichage à cristaux liquides, la lampe (10) ayant un mode normal et un mode de mise en évidence, et dans lequel un excitateur LC (16) commande l'éclairage de la section de mise en évidence (14) de l'écran d'affichage à cristaux liquides (12);
augmenter le courant à la lampe (10) à partir du courant en mode normal jusqu'à un courant intermédiaire étant supérieur au courant en mode de mise en évidence en réaction à la demande de mise en évidence; et
diminuer le courant intermédiaire à la lampe (10) jusqu'au courant en mode de mise en évidence.

10. Procédé selon la revendication 9, comprenant encore l'étape consistant à maintenir le courant intermédiaire à la lampe (10) pendant un temps prédéterminé.

11. Procédé selon la revendication 9, dans lequel l'étape consistant à augmenter le courant à la lampe (10) à partir du courant en mode normal comprend encore une augmentation du courant par une augmentation qui est sélectionnée parmi le groupe constitué d'une étape d'augmentation, d'une augmentation linéaire et d'une augmentation exponentielle.

12. Procédé selon la revendication 9, dans lequel l'étape consistant à diminuer le courant intermédiaire à la lampe (10) à partir du courant en mode normal comprend encore la diminution du courant intermédiaire par une diminution qui est sélectionnée parmi le groupe constitué d'une étape de diminution, d'une diminution linéaire et d'une diminution exponentielle.

13. Procédé selon la revendication 9, dans lequel la zone intégrée au-dessous d'une courbe en fonction du temps de courant intermédiaire en partant de l'augmentation du courant à la lampe (10) à partir du courant en mode normal jusqu'à la terminaison de la diminution du courant intermédiaire à la lampe (10) pour réaliser le courant en mode de mise en évidence est maximisée pour les caractéristiques de la lampe (10) sous la contrainte de capacité de manipulation de courant d'électrode pour éviter une pulvérisation d'électrodes sévère.

14. Procédé selon la revendication 9, comprenant encore les étapes consistant à:
contrôler le flux lumineux de la lampe (10) pour produire un signal de rétroaction de sortie de lampe et à régler le courant intermédiaire sur la base du signal de rétroaction de sortie de lampe.

15. Système d'écran d'affichage à cristaux liquides réagissant à une demande de terminaison de mise en évidence comprenant:
un écran d'affichage à cristaux liquides (12) ayant une section de mise en évidence (14);
une lampe (10) qui est agencée de manière à fournir un éclairage à l'écran d'affichage à cristaux liquides (12);
une unité de puissance (19) qui est couplée opérationnellement à la lampe (10), l'unité de puissance (19) étant agencée de manière à appliquer du courant à la lampe (10);
une interface utilisateur (22); et
un excitateur à cristaux liquides (16) réagissant à un signal de commande de la zone de mise en évidence à partir de l'interface utilisateur (22) et étant agencé de manière à commander l'éclairage de la section de mise en évidence (14) de l'écran d'affichage à cristaux liquides (12);
**caractérisé en ce que**
la lampe (10) présente un mode normal et un mode de mise en évidence;
l'interface utilisateur (22) est couplée opérationnellement à l'unité de puissance (19) et est agencée de manière à appliquer un signal de commande à l'unité de puissance (19), l'unité de puissance (19) réagissant au signal de commande, l'interface utilisateur est agencée de manière à appliquer un signal de commande intermédiaire en réaction à la demande de terminaison de mise en évidence et l'unité de puissance (19) est agencée de manière de manière à augmenter, en réaction au signal de commande intermédiaire, le courant à la lampe (10) à partir d'un courant en mode normal jusqu'à un courant intermédiaire étant inférieur au courant en mode normal, et alors à diminuer le courant intermédiaire jusqu'au courant en mode normal.
